(19)

**Europäisches Patentamt**
**European Patent Office**
**Office européen des brevets**

(11) **EP 4 060 423 A1**

(12) **EUROPEAN PATENT APPLICATION**

(43) Date of publication:
**21.09.2022  Bulletin 2022/38**

(21) Application number: **22161513.1**

(22) Date of filing: **11.03.2022**

(51) International Patent Classification (IPC):
**G03H 1/22** *(2006.01)*  **G03H 1/30** *(2006.01)*
**G03H 1/32** *(2006.01)*  **G03H 1/08** *(2006.01)*

(52) Cooperative Patent Classification (CPC):
**G03H 1/2294; G03H 1/30; G03H 1/32;**
G03H 2001/0825; G03H 2001/221

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2021  GB 202103687**

(71) Applicant: **Envisics Ltd.**
**Milton Keynes MK1 1PT (GB)**

(72) Inventor: **WENGIEROW, Michal**
**Milton Keynes, MK1 1PT (GB)**

(74) Representative: **Greenaway, Martin William**
**Apollo House**
**6 Bramley Road**
**Milton Keynes MK1 1PT (GB)**

(54) **IMAGE PROJECTION**

(57)  A display engine arranged to generate patterns for display by a display device. The display engine is arranged to generate a pattern comprising a first pattern area comprising a first hologram of a first image for projection onto a first image plane and a first lens area of a first lens function having first optical power. The pattern further comprises a second pattern area comprising a second hologram of a second image for projection onto a second image plane and a first lens area of a second lens function having second optical power. The first optical power and the second optical power are different, such that the first image and second image are projected different distances from the pattern when the pattern is illuminated.

FIGURE 6

**Description**

FIELD

The present disclosure relates to image projection. More specifically, the present disclosure relates to a display engine arranged to generate patterns for display by a display device, wherein a generated pattern comprises a hologram of an image for projection onto an image plane. Some embodiments relate to image projection onto two or more different image planes. Some embodiments relate to a head-up display.

BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micromirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD", and Light Detection and Ranging, "LiDAR", for example.

SUMMARY

Aspects of the present disclosure are defined in the appended independent claims.

The present disclosure relates to image projection. It relates to a method of image projection and an image projector which comprises a display device. The present disclosure also relates to a projection system comprising the image projector and a viewing system. The present disclosure further relates to a display engine that is arranged to generate patterns for display by a display device, wherein a generated pattern comprises a hologram of an image for projection onto an image plane.

The present inventors have realised that a display device may be configured to display first and second pattern areas that comprise, respectively, a first input hologram of a first image in combination with a first lens, and a second input hologram of a second image in combination with a second lens. The first and second pattern areas may be displayed in substantially simultaneously or they may be displayed in succession. For example, the display device may be driven to alternate between displaying the first and second pattern areas at a rate that is faster than the typical integration time of a human eye, such that a viewer would regard the first and second images as being displayed at the same time as one another.

The first and second lenses may have first and second respective optical powers, which may be different to one another in order to form the corresponding first and second images at different respective distances, away from the display device. For example, the first image may be formed as a near-field image and the second image may be formed as a far-field image, or vice versa.

The first hologram and/or the second hologram may be 'tiled' for display on the display device. In other words, the display device may have more display pixels than the hologram has hologram pixels. Therefore, one or more of the hologram pixels may be represented more than once on the display device, as part of the corresponding pattern area. Any suitable combination of full-tiles, representing the complete hologram, and/or part-tiles, representing part of the hologram, may be comprised within the corresponding pattern area. Each hologram pixel of a hologram should be represented at least once on the display device, in order for the corresponding image to be projected when the display device is illuminated.

A pattern area may comprise a summed representation, on one or more pixels of the display device, of the corresponding hologram and its associated lens function. Thus, a pattern area may comprise a plurality of pixelated 'display values' that each comprise a combination - e.g. sum - of a hologram value and a lens value. These may be referred to herein as 'hologram-lens' values.

The present inventors have realised that, when two different pattern areas are displayed simultaneously, and therefore a first hologram does not occupy the whole of the pixel space of the display device, the associated first lens function should only be represented (i.e., should only be summed with the corresponding first hologram) on the part or parts of the pixel space of the display device on which the first hologram is represented. Moreover, the present inventors have realised that the pattern of the lens function, in the part or parts of the pixel space of the display device on which the first hologram is represented, should be the same as the lens pattern would be, in that part (or those parts), if the lens function covered the entire pixel space of the display device. In other words, one or more spatial section(s) of the whole lens pattern is used, and summed with the corresponding hologram values, for those parts of the pixel space on which the first pattern area is to appear.

According to an aspect, a display engine is provided, wherein the display engine is arranged to generate patterns for display by a display device. The display engine is arranged to generate a pattern comprising a first pattern area comprising a first hologram of a first image for projection onto a first image plane and a first lens area of a first lens function having first optical power and a second pattern area comprising a second hologram of a second image for projection onto a second image plane and a second lens area of a second lens function having second optical power. The first optical power and the second optical power are different, such that the first image and second image are projected different distances from the pattern when the pattern is illuminated.

Each of the first pattern area and the second pattern area may be arranged to occupy fewer than all the display pixels of the display device.

The first lens area of the first lens may be a sub-portion of the (whole) first lens function. The second lens area of the second lens may be a sub-portion of the (whole) second lens function.

The lens values of the pixels of the first pattern area may be the same as the lens values of those pixels would be, if the first lens function covered all the display pixels of the display device; and the lens values of the pixels of the second pattern area may be the same as the lens values of those pixels would be, if the second lens function covered all the display pixels of the display device.

The first pattern area may comprise at least one whole tile of the first hologram and may optionally comprise one or more additional whole tiles and/or one or more sub-tiles of the first hologram. The first lens function is not tiled, even when the corresponding first hologram is tiled.

The second pattern area may comprise at least one whole tile of the second hologram and may optionally comprise one or more additional whole tiles and/or one or more sub-tiles of the second hologram. The second lens function is not tiled, even when the corresponding second hologram is tiled.

The first and second pattern areas may not overlap one another, when displayed on the display device.

The pattern may further comprise a third pattern area comprising an at least partial replica of the first hologram and a third lens area of the first lens function. To be clear; in such an embodiment, the display device comprises three lens areas in total, two of which are part of the first lens function and one of which is part of the second lens function. The pattern may further comprise a fourth pattern area comprising an at least partial replica of the second hologram and a fourth lens area of the second lens function. To be clear; in such an embodiment, the display device comprises four lens areas in total, two of which are part of the first lens function and two of which are part of the second lens function. Therefore, at least one of the first hologram and/or the second hologram may be displayed on the display device in a 'tiled' manner, with its corresponding lens function. Each lens function itself is not tiled - i.e., each lens value (or, pixel) of a lens function is not represented on the display device more than once. Instead, spatial portions (i.e., sub-parts) of the whole lens function are represented, in accordance with the lens values that the lens function would have in those spatial portions, if it (alone) was distributed across the whole of the display device. There is a spatial correlation between the locations, on the display device, of those spatial portions of each lens that are represented by the respective lens area(s) and the locations of the pattern area(s), or 'tile(s)', of the corresponding holograms. Therefore, the "third lens area" of the first lens function corresponds to a spatially different portion of the first lens function than the "first lens area" of the first lens function corresponds to, and the "second lens area" of the second lens function corresponds to a spatially different portion of the second lens function than the "fourth lens area" of the second lens function corresponds to.

The first pattern area may further comprise a first grating function having a first grating period which translates the first image on the first image plane. The second pattern area may further comprise a second grating function having a second grating period which translates the second image on the second image plane. The first and/or second grating function(s) may be arranged to translate the corresponding image so that the first and second images do not overlap with one another, when viewed along a particular direction and/or when viewed from a particular location or region.

The display engine may be arranged to display the first pattern area and the second pattern area substantially simultaneously.

Each of the first pattern area and the second pattern area may be arranged to occupy fewer than all of the display pixels of the display device. The first pattern area and the second pattern area may be arranged such that, in combination, they occupy all of the display pixels of the display device.

The display device may comprise a spatial light modulator (SLM), for example a Liquid Crystal on Silicon (LCOS) SLM or any other suitable pixelated display device.

Each lens function may comprise a software lens, such as a Fresnel lens or a Fourier-type lens or any other suitable software lens providing a lensing effect.

The display engine may be arranged to display the first pattern area at a first time (T1) and the second pattern area at a second time (T2), different to the first time. A time interval between the first time (T1) and the second time (T2) may be less than an integration time for a human eye. For example, the time interval may be less than 100 milliseconds (ms), such as less than 20ms, for example less than 5 ms. The display engine may be arranged to alternate between displaying the first pattern and displaying the second pattern.

When a first pattern area and a third pattern area are provided, each corresponding to the first hologram, and wherein a second pattern area and a fourth pattern area are provided, each corresponding to the second hologram, any suitable arrangement of those pattern areas may be displayed. For example, the display device may be substantially quadrangular and the first pattern area and the third pattern area may be arranged along a first diagonal of the display device and the second pattern area and the fourth pattern area may be arranged along a second, different diagonal of the display device. Alternatively, the pattern areas of the first hologram may be arranged on a first side of the display device and the pattern areas of the second hologram may be arranged on a second, opposite side of the display device.

The display device may not be quadrangular. More than two holograms may be represented on the display device, either simultaneously and/or in quick succession, so as to be perceived by a viewer as being simultaneous. More than two pattern areas (or tiles) may be provided to represent each hologram, with its lens function, on the display device.

The first image may comprise at least a first light area and at least a first dark area, and the second image may comprise at least a second light area and at least a second dark area. The display engine may be arranged so that the so that, when the first and second images are viewed along a common axis, or from a predefined location or region such as an eye-box of a projection system, the first light area at least partially overlaps with the second dark area and the second light area at least partially overlaps with the first dark area. The first light area may be entirely located within the second dark area and/or the second light area may be entirely located within the first dark area, so that the light parts of the two images do not overlap with or interfere with one another. In other words, the images may be arranged so as not to have a visible overlap between the first light area and the second light area, when both images are viewed along a projection axis, or viewing axis. For example, if the images are each formed on respective 'x-y' planes, they may both be fully visible along a 'z' axis, at least from a certain angle or from a certain viewing point or from within a certain eyebox, without either image overlapping with, changing or obscuring the respective other.

The first pattern area may have a first size, when displayed on the display device, and the second pattern area may have a second, different size, when displayed on the display device. The first hologram may comprise a first number of hologram pixels and the second hologram may comprise a second, different, number of hologram pixels. A first mapping may be made of the hologram pixels of the first hologram to the first pattern area and a second mapping may be made of the hologram pixels of the second hologram to the second pattern area. The first and second mappings may be different to one another.

At least one of the first pattern area and the second pattern area may comprise a plurality of sub-areas, wherein a sub-area represents a contiguous subset of hologram pixels of the corresponding hologram. In other words, at least one of the first pattern area and the second pattern area may spatially correspond to a part-tile of the corresponding hologram.

The display engine may be arranged to change a characteristic of at least one of the first pattern area and the second pattern area, during a time at which the respective pattern area is being displayed on the display device. The changing of one or more characteristics may happen within the viewer's eye's integration time. So, for example, at least two different tiled patterns of a hologram may be displayed within the eye's integration time, which may for example be less than 100 ms, such as less than 20 ms, such as less than 5 ms.

The step of changing a characteristic of a pattern area may comprise one or more of: changing a size, in number of display device pixels, of the pattern area; changing a relationship between one or more hologram pixels of the corresponding hologram and the number of display device pixels representing that hologram pixel, within the pattern area; changing an order or sequence in which one or more hologram pixels of the corresponding hologram is represented, within the pattern area; changing a shape of the pattern area; changing a number of sub-areas, into which the pattern area is divided, on the display device.

Each of the first hologram and the second hologram may comprise a spatial distribution of spatial frequencies. Each of the first hologram and the second hologram may be a Fourier or Fresnel hologram.

The display engine may be arranged to receive a video-rate sequence of input holograms and, for each input hologram, display a corresponding pattern area that comprises the input hologram and a corresponding lens area of a lens function, having optical power. The display engine may be arranged to do so for each hologram, within the video-rate sequence of input holograms, in succession; and/or to do so alternately for first and second input holograms, within the video-rate sequence of input holograms; and/or to do so substantially simultaneously for first and second input holograms, within the video-rate sequence of input holograms.

The display engine may be further arranged to display an input hologram and its corresponding lens area on the pixels of the display device, using a plurality of different pattern arrangements, before displaying a pattern area comprising a next hologram, within the video-rate sequence of input holograms. In other words, each hologram may be represented by a number of different tiling schemes, on the display device, in combination with spatially corresponding sections of its lens function.

According to an aspect, an image projector is provided comprising the display engine of any preceding aspect, a display device arranged to display the pattern and a light source arranged to illuminate the pattern displayed by the display device. The image projector may be comprised with a head-up display (HUD), which may be located in a vehicle.

According to an aspect, a method is provided of projecting a first image onto a first image plane and second image onto a second image plane at substantially the same time. The method comprises determining a first hologram of the first image and determining a first lens area of a first lens function having first optical power, wherein said first lens function enables formation of the first image on the first image plane. The method further comprises determining a second hologram of the second image and determining a second lens area of a second lens function having second optical power, wherein said second lens function enables formation of the second image on the second image plane. The first optical power and second optical power are different, such that the first image and second image are projected different distances from the pattern when the pattern is illuminated. The method further comprises displaying a first pattern area comprising the first hologram and the first lens area on a display device, displaying a second pattern area comprising the second hologram and the second lens area on the display device, and illuminating the display device.

The method may comprise displaying both pattern areas substantially simultaneously with one another. The method may comprise displaying the first and second pattern areas in succession.

The method may comprise determining a plurality of lens areas of the first lens function, wherein the first lens area is comprised within said plurality. Each lens area, comprised within said plurality, may comprise an arc, wherein each of said arcs has a first common centre, as defined on the display device.

The first common centre may be located on a projection axis of the display device. The first image may be formed within a first holographic replay field, on the first image plane, wherein an axis defined between the first common centre and the first image plane centre intersects a centre of the first holographic replay field.

The method may comprise determining a plurality of lens areas of the second lens function, wherein the second lens area is comprised within said plurality.

Each lens area, comprised within said plurality, may comprise an arc, wherein each of said arcs has a second common centre, as defined on the display device.

The second common centre may be located on a projection axis of the display device. The second image is formed within a second holographic replay field, on the second image plane, wherein an axis defined between the second common centre and the second image plane centre intersects a centre of the second holographic replay field.

The first common centre of the first lens function and the second common centre of the second lens function may occupy the same (i.e., a common) location on the display device. In other words, the first lens function and the second lens function may define lens patterns, on the display device, that are substantially concentric with one another.

Alternatively, the first common centre of the first lens function and the second common centre of the second lens function may be spatially separated from one another, on the display device.

The method or display engine of any preceding aspect wherein the display device is a pixelated display device comprising [m × n] pixels, and wherein each of the first hologram and the second hologram comprises [x × y] pixels, wherein m ≥ x and n ≥ y.

According to an aspect, a display engine is provided, arranged to generate patterns for display by a display device having display pixels, wherein the display engine is arranged to generate a pattern comprising a first pattern area comprising a first hologram of a first image for projection onto a first image plane and a first lens area of a first lens function having first optical power, and a second pattern area comprising a second hologram of a second image for projection onto a second image plane and a second lens area of a second lens function having second optical power, wherein the first optical power and second optical power are different such that the first image and second image are projected different distances from the pattern when the pattern is illuminated, wherein the display engine is arranged to display the first pattern area and the second pattern area substantially simultaneously. Each of the first pattern area and the second pattern area is arranged to occupy fewer than all the display pixels of the display device. The lens values in the first pattern area are the same as the lens values would be, in the first pattern area, if the first lens function covered all the display pixels of the display device; and the lens values in the second pattern area are the same as the lens values would be, in the second pattern area, if the second lens function covered all the display pixels of the display device.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g.

in the range 0 to $2\pi$) which represents the amount of phase retardation provided by that pixel. For example, a pixel of the spatial light modulator described as having a phase value of $\pi/2$ will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 shows a first hologram and a first lens for forming a first image at a first image plane, in accordance with embodiments;

Figure 5 shows a shows a second hologram and a second lens for forming a second image at a second image plane, in accordance with embodiments;

Figure 6 shows first and second tiled holograms and first and second lens areas, for forming first and second images at first and second respective image planes, in accordance with embodiments.

The same reference numbers will be used throughout the drawings to refer to the same or like parts.

DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike-the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in codependent relationship.

Optical configuration

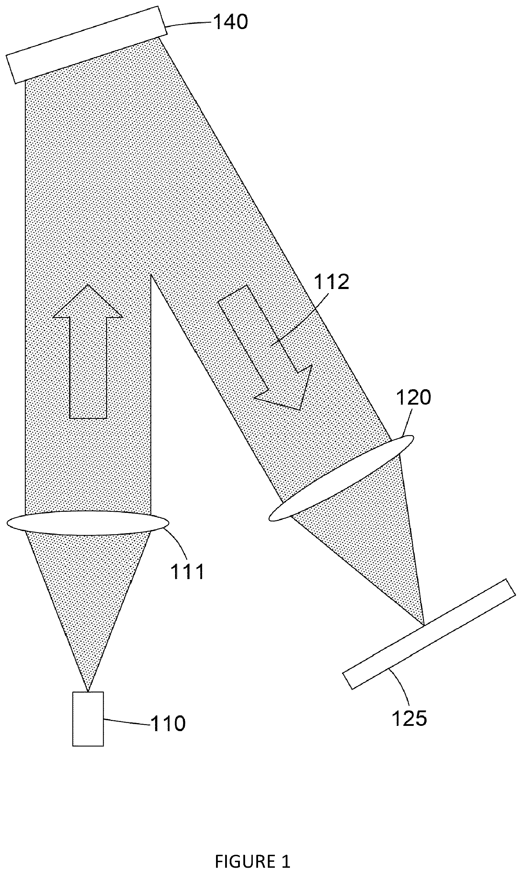

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\Psi_A(x, y)$ and $\Psi_B(x, y)$ respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral or frequency) domain. The corresponding computer-generated hologram in the spectral domain is obtained through at least one iteration of the algorithm. The algorithm is convergent and arranged to produce a hologram representing an input image.

The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information $\Psi[u, v]$ of the Fourier transform of the data set which gives rise to a known amplitude information $T[x, y]$, wherein the amplitude information $T[x, y]$ is representative of a target image (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information $\Psi[u, v]$ is used as the hologram to form a holographic representative of the target image at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a *real* component and an *imaginary* component or (ii) a *magnitude* component and a *phase* component. In some embodiments, the two components of the complex data are processed differently at various stages of the algorithm.

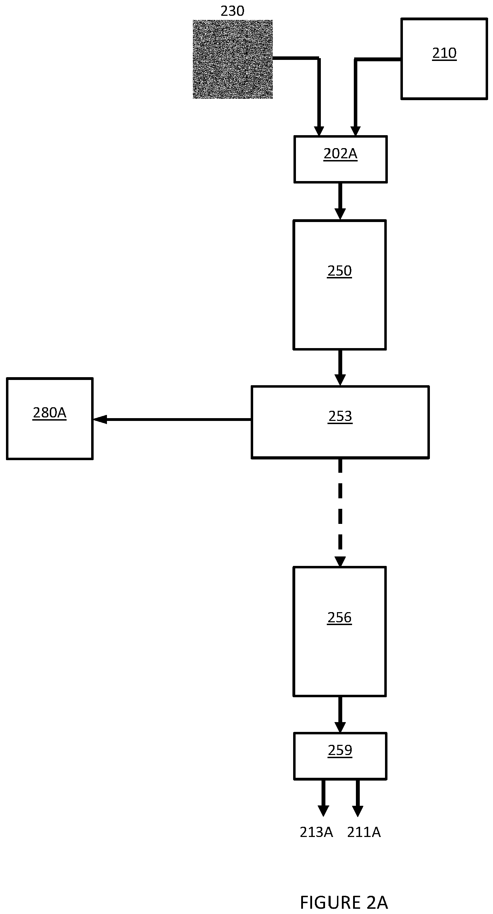

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or user-defined.

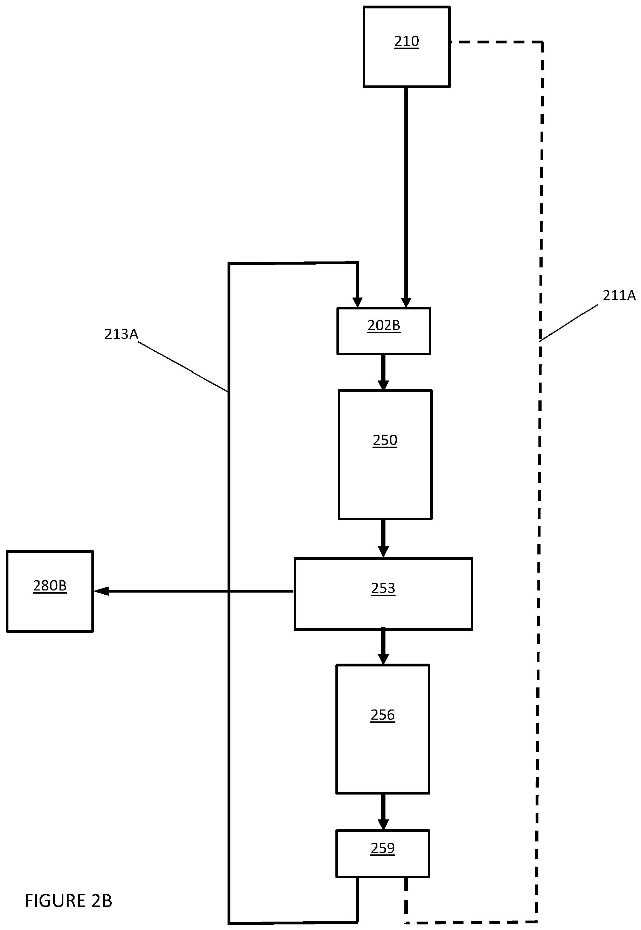

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

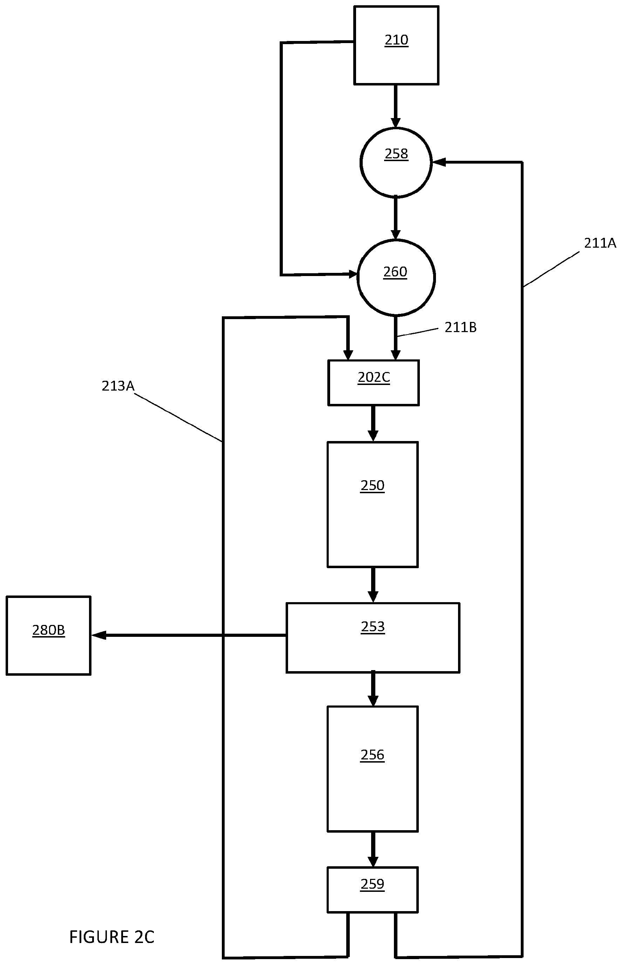

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x,y] = F'\{\exp(i\,\psi_n[u,v])\}$$

$$\psi_n[u,v] = \angle F\{\eta \cdot \exp(i\angle R_n[x,y])\}$$

$$\eta = T[x,y] - \alpha(|R_n[x,y]| - T[x,y])$$

where:

F'     is the inverse Fourier transform;
F      is the forward Fourier transform;
R[x, y]     is the complex data set output by the third processing block 256;

T[x, y] is the input or target image;

∠ is the phase component;

Ψ is the phase-only hologram 280B;

η is the new distribution of magnitude values 211B; and

α is the gain factor.

The gain factor α may be fixed or variable. In some embodiments, the gain factor α is determined based on the size and rate of the incoming target image data. In some embodiments, the gain factor α is dependent on the iteration number. In some embodiments, the gain factor α is solely function of the iteration number.

The embodiment of Figure 2C is the same as that of Figure 2A and Figure 2B in all other respects. It may be said that the phase-only hologram Ψ(u, v) comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as image steering. Again, it is known in the field how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction. The second data providing lensing and/or steering may be referred to as a light processing function or light processing pattern to distinguish from the hologram data which may be referred to as an image forming function or image forming pattern.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and Fresnel holograms which may be calculated by a similar method. The present disclosure is also applicable to holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

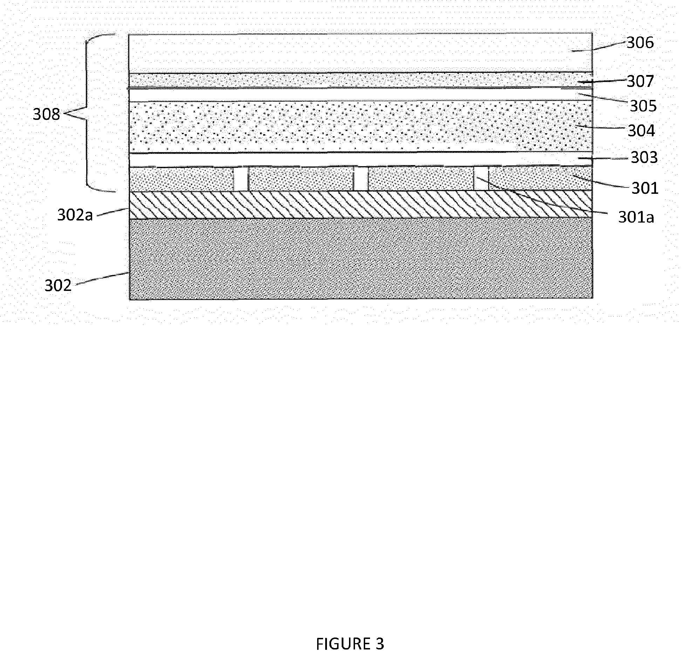

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phasemodulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

Image Projection To Multiple Planes

Embodiments will be described herein that relate to, or comprise, image projectors such as holographic projectors. For example, some embodiments comprise a display engine arranged to generate patterns for display by a display device, wherein the generated patterns comprise a hologram of an image for projection. The generated patterns may also include one or more lens areas of a lens function, as detailed below.

The basic operation of holographic projectors is well known and so will be described in brief only herein. Typically, a holographic projector comprises a display device such as a spatial light modulator (SLM), for example an LCOS SLM. The SLM is configured for display of one or more holograms that correspond to respective images, which are to be projected. As detailed above in relation to Figure 1, a suitable light source is provided to illuminate a hologram, displayed on the SLM. For example, it may be a laser light source. The spatially modulated light that is emitted by the illuminated SLM forms an image that corresponds to the hologram (i.e., a holographic reconstruction) at an image plane. The image may be a real image or a virtual image. Suitable optics may be provided, for directing the spatially modulated light and/or for forming an image from the spatially modulated light, at a desired image plane. Those optics may include any suitable optical elements including, but not limited to, one or more mirrors and/or one or more lenses. For example, it is known to use a selected lens, in combination with a hologram, to display an image on a specific image plane. The lens may be a hardware lens or a software lens, or a combination of the two.

Conventionally, when two or more images are to be formed by a projector, they are formed on a common (i.e., on the same) replay plane. However, in some cases, there may be a demand for the formation of multiple images at multiple respective locations, for example on multiple respective planes, at substantially the same time. Conventionally, this could only be achieved by using multiple projectors or by directing images from a single projector to a single plane and using additional optics to direct certain of those images (or part-images) to one or more different planes. This is a component-intensive approach, and often involves relatively large optical components. It is therefore not practical to implement in many situations, for example in arrangements in which 'real-estate' (i.e., space) is limited and competed for by numerous different systems. One example of this is in a head-up display in a vehicle, in which optics are typically provided under the dashboard of the vehicle, where space is limited and in high demand.

The present inventors have realised a method and system for providing two or more lenses, in combination with two or more respective holograms, for the formation of two or more corresponding images at two or more respective image planes. This can be implemented for a single display device, and thus for a single projector or projection system. Both images may be formed (or may be perceived, by a viewer as being formed) simultaneously, or substantially simultaneously. The present inventors have realised a method and system in which the light of the two image planes do not significantly interfere with each other (for example, due to phenomena such as crosstalk). Therefore, good image quality is achieved, for both images. According to embodiments, the holograms are computer generated holograms (CGH's). According to embodiments, the lenses are software lenses. Each lens may be formed from one or more lens areas, or sub-areas, displayed on a display device such as an SLM, for example an LCOS SLM. According to embodiments, a display engine is configured for providing display patterns comprising one or more pattern areas that each comprise a hologram and a lens area.

Descriptions of examples and embodiments herein refer to the display of 'two' images, for simplicity and ease of understanding, but the principles described herein may be applied for the display of two or more images.

The present inventors have realised that, when two different holograms are provided for projection of corresponding images at two different respective image planes, a first lens, which is provided for the first hologram, may be different to (i.e., which may have a different optical power than) a second lens, which is provided for the second hologram. The two holograms may each be displayed, and combined with its respective lens, using the same (i.e., using a common) display device, such as the same SLM. Each hologram may be combined with - for example, summed with - its respective software lens, and the display device may be 'tuned', or encoded, for example on a pixel-by-pixel basis, with the summed hologram-lens values, accordingly.

The summed hologram-lens values that are required for projection of a first image to a respective first image plane may be displayed, on the SLM or other display device, at the same time as (i.e., simultaneously with) the summed hologram-lens values that are required for projection of a second image to a respective second image plane. For example, one or more first portions of the SLM may display the hologram-lens values corresponding to the first image and one or more second portions may, at substantially the same time, display the hologram-lens values corresponding to the second image. Alternatively, or additionally, the hologram-lens values corresponding to the first image may be displayed by the SLM at a first time (T1) and the hologram-lens values corresponding to the second image may be displayed by the SLM at a second, different time (T2) that occurs shortly after the first time. For example, the time difference between the first time T1 and the second, different time T2 may be less than a typical human eye integration time. Thus, a viewer may see the first and second images as being displayed simultaneously. The respective hologram-lens values corresponding to the first and second images may be displayed on an alternating basis, with the alternation happening more quickly than the typical human eye integration time, over a period of time during which the viewer perceives seeing both images simultaneously with one another.

The hologram-lens values corresponding to an image may be provided on the display device in combination with another function, such as a grating function or phase-ramp function. The values of the grating function, or other function, may be summed or otherwise combined with the hologram-lens values for that image and the display device may be encoded accordingly. As is known to the skilled reader, a grating function may be used to translate the corresponding image on its respective image plane. This may be referred to as translating the holographic replay field on its holographic replay plane. One or more grating functions may be used in order to translate a first image relative to a second image (or vice-versa) on a plane (e.g., on the 'x-y' plane) so that, when viewed substantially along an axis perpendicular to that plane (e.g., along the 'z' axis), the respective image contents of the first and second images do not overlap with one another. According to embodiments, the light of the first image may be formed, from a viewer's perspective, in a black, or background, portion of the second image, and vice versa. If appropriate, one or more grating functions may be used to help achieve this.

A hologram corresponding to an image may be provided in a tiled configuration, on a display device. For example, the number of pixels within the hologram may be lower than the number of pixels on the display device and one or more of the pixels of the hologram may have a one-to-many correlation with the pixels of the display device. Any suitable tiling scheme may be used, in order to correlate the pixels of the hologram to the pixels of the display device. This is described in European patent EP3650949GB which is incorporated by reference in its entirety herein. The present inventors have realised that a software lens, which is to be combined with a hologram for projection of a corresponding image onto a desired image plane, may be provided in a manner that matches, or fits, the tiling of the respective hologram. Two or more tiled holograms, and their corresponding lenses, may be provided on a display device, simultaneously with one another or sequentially to one another.

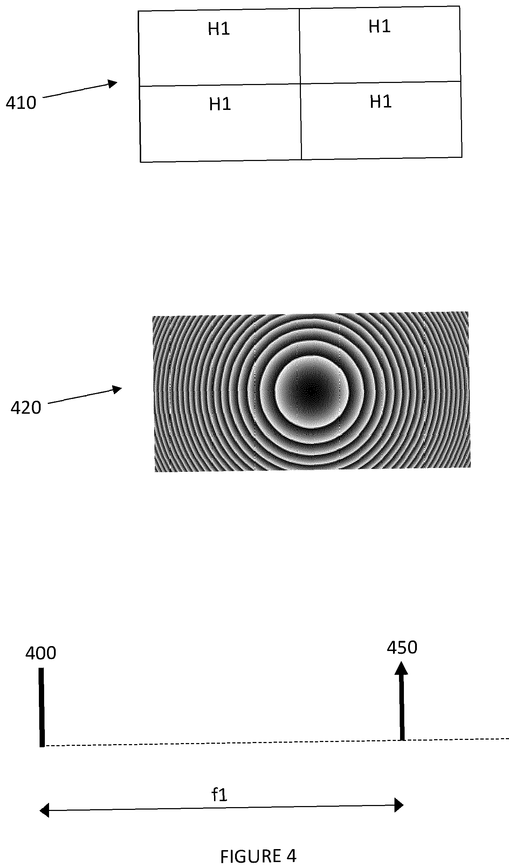

Figure 4 shows an example for displaying a first hologram, H1, that corresponds to a first image that is to be projected. The first hologram corresponds to (i.e., has been calculated to represent) a first target image or object, and the 'first image' referred to herein is a holographic reconstruction of the first hologram, and therefore is a holographic representation of the first target image or object. Any suitable method may be used to calculate the first hologram H1. For example, a display driver may be configured to provide holograms to the display device. A hologram engine may be configured to determine the holograms that are provided to the display driver. The hologram engine may selectively retrieve holograms from memory or, in some examples, calculate holograms (e.g., in real-time).

The first hologram H1 is displayed on a display device 400, which may be an SLM. Individual pixels of the first hologram H1, and individual pixels of the display device 400, are not individually shown in Figure 4. Instead, four tiles, each represented by a rectangle comprising the term 'H1', are shown on the display device 400. This is a schematic representation, for ease of understanding. In fact, the first hologram H1 comprises a plurality of pixels - for example, [x × y] pixels. The display device 400 comprises [m × n] pixels, wherein m > x and n > y. In other words, the display device 400 has more pixels than the first hologram H1 does. In some other embodiments, the display device may have the same number of pixels as the hologram that is to be displayed, i.e., $m \geq x$ and $n \geq y$.

In embodiments in which the display device has more pixels than the hologram has, tiling may be used to fill the display device. That is, tiling may use all pixels of the display device to display the hologram. In some embodiments, all tiles are quadrangular. In some embodiments, all tiles are rectangular. Each tile may have any size or aspect ratio, as required.

Returning to the example of Figure 4, a tiling scheme is employed, which uses the extra pixels of the display device 400 to display repeats of the first hologram H1. Thus, a tiling pattern 410 is provided on the display device 400, wherein the tiling pattern 410 comprises a plurality of tiles. A 'tile' is a continuous, contiguous group of pixels of the corresponding hologram. A 'full-tile' is the complete hologram. That is, a full-tile is the complete, contiguous group of [x × y] pixels of the hologram. A 'part-tile' is a subset of the hologram. That is, a part-tile is a continuous, contiguous subset of the [x × y] pixels of hologram.

In the example tiling pattern 410 of Figure 4, there are four full-tiles of the first hologram H1, arranged in a 2 x 2 formation. This formation is only an example and should not be regarded as limiting for the present disclosure. Any suitable combination and arrangement of one or more full-tiles, and/or one or more part-tiles, may be provided for the first hologram and/or for a second or subsequent or additional hologram. In any such tiling scheme, each pixel of the hologram should have at least a one-to-one correlation with the pixels of the display device, and one or more pixels of the hologram may have a one-to-many correlation with the pixels of the display device. Tiling a hologram in this manner may improve the image quality of the resulting holographic reconstruction. Specifically, it may smooth or average out optical effects which conventionally manifest themselves as noise or artefacts in the holographic reconstruction.

The display device 400 in Figure 4 is configured to be illuminated in order to display a first image, corresponding to the first hologram H1, at an image plane 450 that is located at a distance 'f1' away from the display device 400. In order to achieve this, a software lens 420 is provided. The skilled reader will be familiar with software lenses and their display on pixelated display devices such as SLM's. For example, the software lens 420 may comprise a Fresnel lens, having a corresponding Fresnel lens pattern. A pixelated display device - e.g., an SLM, such as an LCOS SLM - may be arranged to display a light modulation pattern comprising the Fresnel lens pattern in accordance with a stream of corresponding Fresnel lens values. In the example of Figure 4, the lens values of the software lens 420 may be summed with (i.e., added to) the hologram values of the tiled first hologram H1, and the display device 400 may be configured to display the resulting hologram-lens values on its pixels.

Any suitable method may be employed, and any suitable processor or controller may be used, according to the present disclosure, for calculating the values of an appropriate software lens, for use with a particular hologram, for display of a corresponding image at a desired distance away from the display device. For example, the software lens values may be calculated by a logic device (e.g., a field-programmable gate array, "FPGA") comprising a suitable logic circuit. A suitable logic circuit may also be implemented in another type of programmable logic device, "PLD", or in an application specific integrated circuit, "ASIC" or similar custom layout logic device. A logic device such as an FPGA may be further arranged to add the software lens values that it calculates to a stream of lens values. The logic device may be further arranged to add those lens values to hologram pixel values of a stream of hologram pixel values, to form a data stream of 'display' values (also referred to herein as 'hologram-lens' values). A light modulation pattern may be formed in accordance with the stream of display values, on the display device 400, which can then be illuminated to form the first image at the desired distance, f1, from the display device 400.

In Figure 4, the pattern 420 of the software lens is illustrated as comprising a central circle, which is black at its centre and fades radially outwards, through grey, to white. The central circle is surrounded by a plurality of concentric circles, each of which comprises black that fades radially outwards, through grey, to white, wherein the thickness of each circle, and the spacing between consecutive circles, reduces radially outwards of the centre. As the skilled reader will appreciate, this illustration does not necessarily represent what would be seen on the display device but is a visual representation of the 'grey level' modulation pattern provided by the software lens, if displayed on a display device such as a spatial light modulator (SLM). In practice, each pixel of the display device, when it displays (i.e., is encoded with) the software lens, is arranged to provide a particular modulation level, or "lens value". For example, for phase modulation the grey level for each pixel is between 0 and $2\pi$ (2 pi). The pattern of the grey levels provided by the pattern 420 is therefore represented visually in Figure 4 by different shades, from black, through grey, to white. In practice, as described above, the pixels of the display device 400 of Figure 4 may be configured to display values that represent a combination of- e.g., the sum of - the software lens 420 with the tiled first hologram H1. It should be noted that the software lens is not tiled, even though the hologram H1 is tiled in this example. Moreover, it will be appreciated that the present disclosure is not limited to the particular example of software lens pattern 420 that is shown in Figure 4.

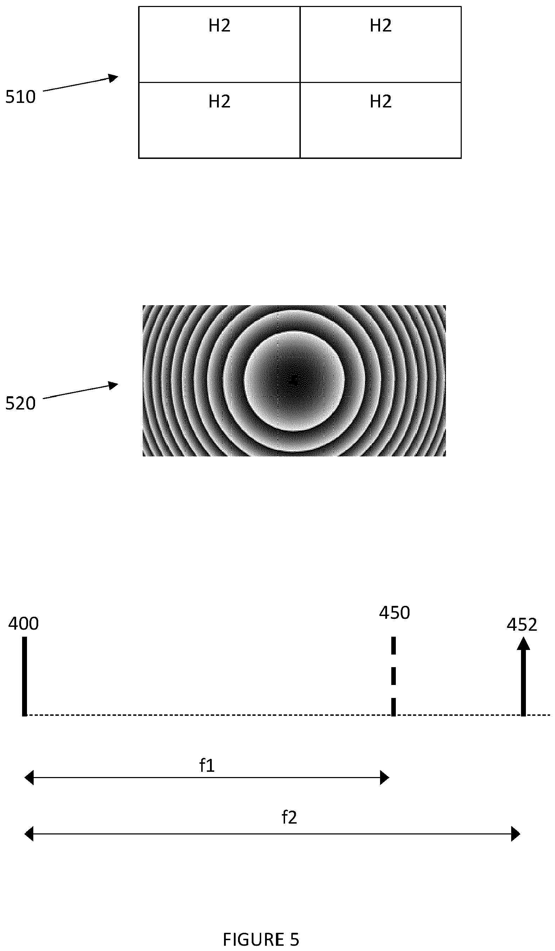

Figure 5 shows a second tiling pattern 510 of a second hologram H2, which is different to the first hologram H1. The second tiling pattern 510 comprises a 2 x 2 arrangement of 4 full-tiles, each corresponding to the whole of the second hologram H2. However, it will again be appreciated that this tiling pattern 510 is shown by way of example only and that other tiling patterns are contemplated. Also shown in Figure 5 is a second software lens pattern 520. It is of a similar type to the first software lens pattern of Figure 4, but with different respective circle radii, thicknesses and spacings. Again, what is shown in Figure 5 is merely a visual illustration of the modulation levels provided by second software lens pattern. Again, it should be noted that the software lens is not tiled, even though the corresponding hologram H2 is tiled in this example. Moreover, the particulars of the software pattern 510 of Figure 5 are shown by way of example only and should not be construed as limiting on this disclosure.

The second hologram H2 corresponds to a second image that is to be projected. The second hologram corresponds to (i.e., has been calculated to represent) a second target image or object, and the 'second image' referred to herein is a holographic reconstruction of the second hologram, and therefore is a holographic representation of the second target image or object. Any suitable method may be used to calculate the second hologram H2.

The display device 400 of Figure 4 may also be arranged to display the second tiling pattern 510 of the second hologram H2, in combination with the second software lens 520, in order to form a corresponding second image at a second image plane 452, located at a second distance 'f2', away from the display device 400. Figure 5 shows the first image plane 450 as a dashed line since, according to an embodiment, the display device 400 is configured to alternately display the first hologram-lens combination 410 420 and the second hologram-lens combination 510, 520. In other words, the display device 400 is arranged, according to an embodiment, to be entirely populated by display values that represent a sum of the first hologram (in its first tiling pattern 410) and the first software lens 420, at a first time T1. The display device is then further arranged to be entirely populated by display values that represent a sum of the second hologram H2 (in its second tiling pattern 510) and the second software lens 520, at a second time T2, which is different to the first time T1. The time difference (or, interval, or, gap) between the first time T1 and the second time T2 should be very short. For example, it may be less than the typical integration time for a human eye. The time period for which a given hologram and its lens are displayed may be referred to as a 'frame' or a 'sub-frame'. The display device 400 may be configured to alternate between the first and second hologram-lens combinations, any suitable number of times or for any suitable period of time or over any suitable number of frames or sub-frames. As a result, a viewer viewing images formed by the display device will perceive that they are viewing both the first image and the second image simultaneously, wherein those first and second images are seen by the viewer as being respectively located at first and second image planes, which are different to one another. In other words, one of the images will be perceived by the viewer as being further away than the respective other.

As mentioned above, it is typically desirable for the first image and the second image to be provided in a non-overlapping manner, from a viewer's perspective, so that image distortion is avoided and so that the viewer can discern all available information from both images. This may not be possible, for all possible viewer perspectives, in certain arrangements. However, according to embodiments, one or more regions or locations may be identified as being comprised within an eye-box, from which perspective the first and second images should not overlap or interfere with one another. Therefore, the light portions of the first image should not overlap with the light portions of the second image, along a line of sight between the viewer and the images.

According to embodiments, the holographic replay field of the first image may be linearly displaced/translated on its image plane (which may also be referred to as its 'replay plane') by adding a grating or phase-ramp function to the first hologram, and/or the holographic replay field of the second image may be linearly displaced/translated on its image plane (or, replay plane) by adding a grating or phase-ramp function to the second hologram, in order to better align the two images with one another. Adding a grating or phase-ramp function to a hologram amounts to superimposing the hologram and grating function. The grating therefore translates the image spots (i.e., the light portions) of the holographic reconstruction of the corresponding hologram on the replay plane. A suitable grating function, or phase-ramp function, may be added to (i.e., summed with) the corresponding hologram and its software lens, on a display device.

In some embodiments, an x-direction grating and a y-direction grating are both superimposed with (e.g. added to) the hologram in order to provide alignment on the x-y display plane. The amount of translation provided by the grating depends on the grating angle of the grating, which may be software controlled. According to embodiments, an alignment process may be carried out whereby a number of different grating functions, each corresponding to a different grating angle, may be added to a hologram-lens combination, one at a time, in order to identify a correct grating function for achieving a desired displacement, in a given situation. This may be done at very high speeds, so as not to be visually perceptible to the viewer. During such a process of alignment, the hologram/s does not need to be recalculated. Instead, the grating function is changed and the superposition (e.g. sum) of the hologram and grating function (and the lens) is recalculated. This process can be performed in real-time. A plurality of different grating functions may be stored in memory and recalled as necessary in an automated process. The grating function may be superimposed/added to a hologram and lens by any suitable device such as a display driver (e.g., a field-programmable gate array or application-specific integrated circuit). In some embodiments, the grating function(s) is/are calculated in real-time.

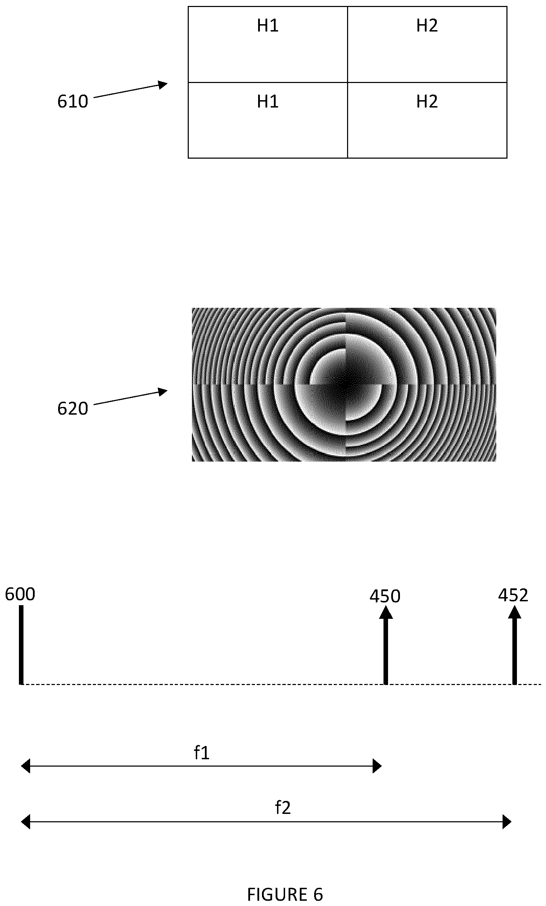

Figure 6 shows another example, according to an embodiment, in which the first hologram H1 and the second hologram H2 are both displayed simultaneously, on different respective portions of a display device 600. A tiling pattern 610 is implemented, in which two full tiles of the first hologram H1 are displayed along with two full tiles of the second hologram H2, in a 2 x 2 rectangular configuration. As with the examples in Figures 4 and 5, the particular tiling pattern shown in Figure 6 is provided by way of example only and other tiling patterns are contemplated. For example, in the tiling pattern 610 of figure 6, the tiles of each hologram are provided linearly (i.e., one on top of the respective other) but they may instead be provided in a diagonal arrangement - e.g., in a 2 x 2 pattern, the first hologram H1 may occupy the top-left and bottom-right tiles and the second hologram H2 may occupy the top-right and bottom-left tiles. Many other possible variations are also contemplated, as will be described further below.

Returning to Figure 6; a software lens pattern 620 is shown, that is configured to be displayed on the display device 600, in addition to the tiled arrangement of the first H1 and second H2 holograms, in order to simultaneously produce a first image at the first image plane 450 and a second image at the second image plane 452, when the display device 600 is suitably illuminated. Thus, the display device is configured so that each pixel may display a 'display value' or 'hologram-lens value' that comprises an addition of the relevant hologram value and the relevant software lens value, at a given time.

As can be seen, the software lens pattern 620 in Figure 6 is divided up into quadrants, which correspond in size and shape to the tiles of the tiling pattern 610 of the holograms. For each quadrant position, the form (i.e., the pattern) of the software lens matches the form (i.e., the pattern) of the corresponding quadrant of the software lens that was shown, in either Figure 4 or Figure 5, respectively, as being applicable to the hologram that occupies the corresponding position in the tiling pattern 610. In other words, the top left-hand tile of the tiling pattern comprises the first hologram H1. Therefore, the top left-hand quadrant of the software lens pattern 620 matches the top left-hand quadrant of the first software lens pattern 420. On the other hand, the top right-hand tile of the tiling pattern 610 comprises the second hologram H2. Therefore, the top right-hand quadrant of the software lens pattern 620 matches the top right-hand quadrant of the second software lens pattern 520. It follows that the bottom right-hand quadrant of the software lens pattern 620 matches the bottom right-hand quadrant of the second software lens pattern 520, and the bottom left-hand quadrant of the software lens pattern 620 matches the bottom left-hand quadrant of the first software lens pattern 420.

The present inventors have realised that the software lens pattern 620 can be added to a tiled combination of the first hologram H1 and the second hologram H2, in order to simultaneously produce the first 450 and second 452 images, at their respective distances, f1 and f2, away from the display device. They have realised that it is sufficient to provide a portion (or portions) of the corresponding lens, for addition to a hologram tile (which may be a full-tile or a part-tile) on the pixels of a display device, in order for the lens portion(s) to have the effect of locating the resultant image at a desired distance, away from the display device. In the example of Figure 6, only half of each of the first software lens pattern 410 and the second software lens pattern 510 is provided, at locations that spatially correspond to the locations of the tiles of their respective holograms. But this is just one example, and many variations are contemplated, to which the same principles apply.

Thus, the present inventors have realised that a portion or portions of a software lens - which may be referred to as 'lens areas' or 'lens sub-areas' - may be provided at one or more locations of a display device that correspond spatially to the one or more respective locations of tiles, or part tiles, or pixels, of a corresponding hologram. The term 'corresponding hologram' in this context means, according to the realisations made by the present inventors, a hologram that the software lens is intended to be used with in order to form a corresponding holographically reconstructed image at a desired distance (i.e., on a desired image plane, or replay plane), away from the display device. Thus, respective portions of two or more lenses may be provided at locations that correspond to the tiles of two or more respective corresponding tiled holograms, on a display device.

The present inventors have realised that, when the hologram is tiled - i.e., when one or more of the pixels of the hologram is represented more than once on the display device - the software lens does not need to be provided in its entirety for each tile. In other words, the software lens does not also need to be 'tiled'. Instead, when the hologram is tiled, a portion of the lens is provided at the location of each tile - i.e., at the pixels that each tile occupies, on the display device. The form (i.e., the pattern) of the software lens at each such location is identical to the form (i.e., its pattern) that would be displayed on the pixels of the display device, at that location, if the lens were displayed across the entirety of the display device. Moreover, the centre of the software lens pattern does not change, when it is to be used with a tiled hologram that does not occupy all of the display device. Instead, the portion(s) of the lens that are located outside the tile(s) of the corresponding hologram are omitted or 'cropped out'.

The software lens remains the same, for a particular hologram and a particular desired image plane, regardless of the hologram tiling scheme. Therefore, if the tiling scheme for the hologram dynamically changes, but the desired image plane remains the same, the selection of software lens does not change, but different portions of that software lens may be provided, in keeping with the different tiling scheme of the hologram. In other words, there should always be "spatial matching" between the lens and the tiles of the corresponding hologram on the display device.

As with the examples of Figures 4 and 5, one or both of the hologram-lens combinations in Figure 6 may be provided with a suitable function such as a grating function or a phase-ramp function, for translation of the corresponding image on its image plane. The grating function may be added as part of an alignment process, for example an iterative alignment process. The grating function may comprise an x-direction grating and/or a y-direction grating. The translation of an image, relative to the respective other and/or relative to an eye box or line of sight of a viewer, may be made in order to avoid or reduce interference between, or overlap of, the two images.

The holograms and software lenses may be calculated by any suitable methods, using any suitable respective processor, controller, logic device or logic circuit. A hologram and/or a software lens pattern may be stored in, and retrieved from, a memory. In some embodiments, the hologram(s) and/or the software lens(es) may be calculated in real time.

A display device may be provided, configured to carry out the method described above in relation to Figures 4 and 5, and/or the method described above in relation to Figure 6. That is, the display device may be configured to provide two or more holograms and their corresponding lenses on a time-alternating basis, wherein at any given time just one hologram (e.g., a tiled hologram) and its lens is displayed across the display device. Additionally, or alternatively, the display device may be configured to provide two or more holograms and portions of their corresponding lenses on a spatially-changing basis, wherein one or more parts of the display device show a first hologram with a portion of its corresponding lens and one or more other parts of the display device show a second, different hologram with a portion of its corresponding lens. Typically, the first image projected by the display device is a 'near-field' image and the second image projected by the device is a 'far-field' image, or vice versa.

The display device may be provided as part of a system, such as a holographic projection system. In some embodiments, the holographic projection system is a head-up display or part of a head-up display, for example in a vehicle. The methods described herein may be carried out *in-situ* in a vehicle housing the head-up display.

The display device may be arranged to carry out the methods described herein for a succession of different pairs of images. In other words, the display device may be arranged to display images at first and second different image planes over a period, or periods, of time - continuously or intermittently - wherein the image content of the images changes, over time.

Thus, improved methods and systems are provided for displaying two images substantially at the same time, at two different image planes, using a single display device. The realisations made by the present inventors reduce the number (and overall bulk/size) of optical components in order to form both images at different locations, using the same display device, at substantially the same time as one another. This can be particular advantageous in arrangements in which space is at a premium, such as in a vehicle, for example under a dashboard in a vehicle. At least in some embodiments, the same (i.e., a common) optical relay system may be used to relay both images to their respective image planes. Moreover, the provision of two different image planes for images projected by the same display device - e.g., with the same projector system - enables enhanced flexibility of optical design for far and near field. For example, it enables different respective diffusers, with different respective diffusion properties such as diffusion angle or tilt, and/or optics to be provided for far field and near field images, respectively. As a result, it is possible to increase brightness, image quality and deal with solar reflections for the system, which may vary with field depth.

Referring to the tiling patterns in both the time-varying and spatially-varying embodiments described herein - a number of different possibilities are contemplated, according to the present disclosure. For example, more than two holograms and their corresponding lenses may be represented on a display device at substantially the same time. For example, the use of part tiles is contemplated, either instead of or in addition to one or more full tiles, for either a first hologram and/or a second (or, additional, or subsequent) hologram. For example, one or more of the full tiles of a first hologram may be of a different size to one or more full tiles of a second hologram. For example, this may be because the first and second holograms are not the same size (in terms of number of pixels) as one another and/or it may be because a first mapping scheme is used to map the first hologram to its tile(s) and a second, different mapping scheme is used to map the second hologram to its tile(s). That is, one or more pixels of a first hologram may have a first one-to-many correlation with the pixels of the display device and one or more pixels of a second, different hologram may have a second, different one-to-many correlation with the pixels of the display device.

For example, each pixel within a single hologram need not have the same one-to-one or one-to-many correlation with the pixels of the display device as the respective other pixels of that hologram. Moreover, in embodiments in which two or more full tiles of the same hologram are displayed, those full tiles need not be the same size as one another. In other words, different mapping schemes may be used to map the hologram to each of its respective full tiles.

Although in the examples described we refer to a first hologram and a second, different hologram, there may be cases in which the same hologram is to be displayed at each of two different image planes. In such a case, a different software lens would be needed, in combination with the same hologram, for each respective image. Therefore, the display device would be configured to display two different hologram-lens values, either on a time-varying or spatially-changing basis. The methods described herein may be applied in such a case.

For example, a tiling scheme need not represent both holograms (or, each hologram, if more than two are displayed) evenly. For example, each pixel of a first hologram may be represented only once on a display device and at least one pixel of a second, different hologram may be represented more than once on the display device.

The alignment of two or more tilled holograms (with their lenses) on a display device does not have to be rectangular. It can have different shapes depends. For example, the tiling pattern may vary dependent on the frequencies that are present in the corresponding holograms and/or on the particular visual defects that the tiling addresses.

For example, a tiling pattern for the first hologram and/or the second hologram may be dynamically changed, or reconfigured. For example, either a first mapping scheme that is used for mapping the first hologram to its tile(s) and/or a second mapping scheme that is used for mapping the second hologram to its tile(s) may be dynamically reconfigured or updated. For example, a mapping scheme may be changed, over time, at random and/or in accordance with a pre-configured scheme, and/or in response to one or more received signals representative of a measurement made in relation to the images that are produced when the display device is illuminated, or in relation to something else.

A hologram that is to be tiled may be input into a display driver or other suitable processor. It may be referred to as being an 'input hologram'. A tiled arrangement of that hologram may be referred to as an 'output hologram'. The received input hologram may be one hologram of a sequence of holograms and a plurality of output holograms may be generated for each input hologram. For example, a plurality of output holograms corresponding to the same input hologram may be displayed before the next input hologram is processed. The image content of each output hologram is, of course, the same but, in this embodiment, different tiling schemes may be used to form the output holograms. The number of output holograms per input hologram may be determined, for example, by the speed of the hardware, refresh rate of the display device or frame rate of incoming images or computer-generated holograms corresponding to the images. In examples, each input hologram is used to form 3 or 6 differently-tiled output holograms. Different tiling schemes can be used with a single input hologram, which enables multiple holographic reconstructions of the same image. For the avoidance of doubt, one tiling scheme is used to form an output hologram from an input hologram and an output hologram gives rise to a holographic reconstruction when suitably illuminated. The use of different tiling schemes with the same input hologram to display a sequence of corresponding output holograms is found to improve image quality. Optionally, the tiling scheme may be changed 2 to 6 times per input hologram, though the tiling scheme could be changed 2 to 12 times per input hologram. That is, 2 to 6 or even 2 to 12 different output holograms could be displayed in succession for each input hologram, wherein each output hologram is a differently tiled version of the same input hologram. Any other rate of change of the tiling scheme is possible. For example, the rate of change of tiling schemes can be equal to or greater than, for example, 120 Hertz (Hz), 180 Hz, 240 Hz, 300 Hz, 360, 420 Hz, or 480 Hertz (Hz), to achieve this effect. The tiling scheme may be changed every other output hologram, for example, or in accordance with any conceivable scheme.

The display driver may be arranged to receive a sequence of input holograms such as a video-rate sequence of input holograms. The driver may be arranged to, for each input hologram, display a plurality of corresponding output holograms in succession, before the next input hologram is received, by tiling the input hologram onto the pixels of the spatial light modulator using a plurality of different tiling schemes.

Likewise, the method of driving a display device such as a spatial light modulator may further comprise receiving a video-rate sequence of input holograms and, for each input hologram, displaying a plurality of corresponding output holograms in succession, before the next input hologram is received, by tiling the input hologram onto the pixels of the spatial light modulator using a plurality of different tiling schemes.

One or more of the images formed according to the presently described embodiments may be a virtual image. That is, the 'image plane' described throughout this disclosure may be a virtual image plane. For example, it may be a virtual image plane of a head-up display (HUD) which forms virtual images using the windscreen of a vehicle or even a dashboard pop-up combiner.

The methods described herein may be applied separately to each of a plurality of images corresponding to separate colour channels of a holographic projection system. The methods described herein may be applied to separate colour frames of an image that are displayed sequentially by a holographic projection system.

Additional features

Embodiments refer to an electrically-activated LCOS spatial light modulator by way of example only. The teachings of the present disclosure may equally be implemented on any spatial light modulator capable of displaying a computer-generated hologram in accordance with the present disclosure such as any electrically-activated SLMs, optically-activated SLM, digital micromirror device or microelectromechanical device, for example.

In some embodiments, the light source is a laser such as a laser diode. In some embodiments, a detector may be provided, wherein the detector is a photodetector such as a photodiode. In some embodiments, a light receiving surface may be provided wherein the light receiving surface is a diffuser surface or screen such as a diffuser. The holographic projection system of the present disclosure may be used to provide an improved head-up display (HUD) or head-mounted display. In some embodiments, there is provided a vehicle comprising the holographic projection system installed in the vehicle to provide a HUD. The vehicle may be an automotive vehicle such as a car, truck, van, lorry, motorcycle, train, airplane, boat, or ship.

The quality of the holographic reconstruction may be affected by the so-called zero order problem which is a consequence of the diffractive nature of using a pixelated spatial light modulator. Such zero-order light can be regarded as "noise" and includes for example specularly reflected light, and other unwanted light from the SLM.

In the example of Fourier holography, this "noise" is focussed at the focal point of the Fourier lens leading to a bright spot at the centre of the holographic reconstruction. The zero order light may be simply blocked out however this would mean replacing the bright spot with a dark spot. Some embodiments include an angularly selective filter to remove only the collimated rays of the zero order. Embodiments also include the method of managing the zero-order described in European patent 2,030,072, which is hereby incorporated in its entirety by reference.

In some embodiments, for example in some cases when two holograms are displayed alternately at fast speeds, such that the viewer sees both corresponding images as being displayed simultaneously, the size (number of pixels in each direction) of each hologram is equal to the size of the spatial light modulator so that the hologram fills the spatial light modulator. That is, the hologram uses all the pixels of the spatial light modulator. In other embodiments, the hologram is smaller than the spatial light modulator. More specifically, the number of hologram pixels is less than the number of light-modulating pixels available on the spatial light modulator. In some of these other embodiments, part of the hologram (that is, a continuous subset of the pixels of the hologram) is repeated in the unused pixels.

As detailed above, this technique may be referred to as "tiling" wherein the surface area of the spatial light modulator is divided up into a number of "tiles", each of which represents at least a subset of the hologram. Each tile is therefore of a smaller size than the spatial light modulator. In some embodiments, the technique of "tiling" is implemented to increase image quality. Specifically, some embodiments implement the technique of tiling to minimise the size of the image pixels whilst maximising the amount of signal content going into the holographic reconstruction. In some embodiments, the holographic pattern written to the spatial light modulator comprises at least one whole tile (that is, the complete hologram) and at least one fraction of a tile (that is, a continuous subset of pixels of the hologram).

In embodiments, only the primary replay field is utilised and system comprises physical blocks, such as baffles, arranged to restrict the propagation of the higher order replay fields through the system.

In embodiments, the holographic reconstruction is colour. In some embodiments, an approach known as spatially-separated colours, "SSC", is used to provide colour holographic reconstruction. In other embodiments, an approach known as frame sequential colour, "FSC", is used.

The method of SSC uses three spatially-separated arrays of light-modulating pixels for the three single-colour holograms. An advantage of the SSC method is that the image can be very bright because all three holographic reconstructions may be formed at the same time. However, if due to space limitations, the three spatially-separated arrays of light-modulating pixels are provided on a common SLM, the quality of each single-colour image is suboptimal because only a subset of the available light-modulating pixels is used for each colour. Accordingly, a relatively low-resolution colour image is provided.

The method of FSC can use all pixels of a common spatial light modulator to display the three single-colour holograms in sequence. The single-colour reconstructions are cycled (e.g. red, green, blue, red, green, blue, etc.) fast enough such that a human viewer perceives a polychromatic image from integration of the three single-colour images. An advantage of FSC is that the whole SLM is used for each colour. This means that the quality of the three colour images produced is optimal because all pixels of the SLM are used for each of the colour images. However, a disadvantage of the FSC method is that the brightness of the composite colour image is lower than with the SSC method - by a factor of about 3 - because each single-colour illumination event can only occur for one third of the frame time. This drawback could potentially be addressed by overdriving the lasers, or by using more powerful lasers, but this requires more power resulting in higher costs and an increase in the size of the system.

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

Some embodiments describe 2D holographic reconstructions by way of example only. In other embodiments, the holographic reconstruction is a 3D holographic reconstruction. That is, in some embodiments, each computer-generated hologram forms a 3D holographic reconstruction.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solidstate memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1. A display engine arranged to generate patterns for display by a display device,
   wherein the display engine is arranged to generate a pattern comprising: a first pattern area comprising a first hologram of a first image for projection onto a first image plane and a first lens area of a first lens function having first optical power; a second pattern area comprising a second hologram of a second image for projection onto a second image plane and a second lens area of a second lens function having second optical power, wherein the first optical power and second optical power are different such that the first image and second image are projected different distances from the pattern when the pattern is illuminated.

2. A display engine as claimed in claim 1 wherein the pattern further comprises a third pattern area comprising an at least partial replica of the first hologram and a third lens area of the first lens function, and optionally wherein the pattern further comprises a fourth pattern area comprising an at least partial replica of the second hologram and a fourth lens area of the second lens function.

3. A display engine as claimed in claim 1 or claim 2 wherein the first pattern area further comprises a first grating function having a first grating period which translates the first image on the first image plane and optionally wherein the second pattern area further comprises a second grating function having a second grating period which translates the second image on the second image plane.

4. A display engine as claimed in any of claims 1 to 3 wherein the display engine is arranged to display the first pattern area and the second pattern area substantially simultaneously.

5. A display engine as claimed in any preceding claim wherein the first image comprises a first light area and a first dark area, and wherein the second image comprises a second light area and a second dark area, wherein the display engine is arranged so that, when the first and second images are viewed along a common axis, the first light area at least partially overlaps with the second dark area and the second light area at least partially overlaps with the first dark area.

6. A display engine as claimed in any preceding claim, wherein at least one of the first pattern area and the second pattern area comprises a plurality of sub-areas, wherein a sub-area represents a contiguous subset of hologram pixels of the corresponding hologram.

7. A display engine as claimed in any preceding claim wherein the display engine is arranged to change a characteristic of at least one of the first pattern area and the second pattern area, during a time at which the respective pattern area is being displayed on the display device.

8. A display engine as claimed in claim 7 wherein the step of changing a characteristic of a pattern area comprises one or more of:

changing a size, in number of display device pixels, of the pattern area; changing a relationship between one or more hologram pixels of the corresponding hologram and the number of display device pixels representing that hologram pixel, within the pattern area;

changing an order or sequence in which one or more hologram pixels of the corresponding hologram is represented, within the pattern area; changing a shape of the pattern area; and changing a number of sub-areas, into which the pattern area is divided, on the display device.

9. A display engine as claimed in any preceding claim wherein the display engine is arranged to:

(i) receive a video-rate sequence of input holograms;

for each input hologram, display a corresponding pattern area that comprises the input hologram and a corresponding lens area of a lens function, having optical power, and optionally wherein the display engine is arranged to:

carrying out step (ii) for each hologram, within the video-rate sequence of input holograms, in succession; and/or carry out step (ii) alternately for first and second input holograms, within the video-rate sequence of input holograms; and/or carry out step (ii) substantially simultaneously for first and second input holograms, within the video-rate sequence of input holograms.

10. An image projector comprising the display engine of any preceding claim, a display device arranged to display the pattern and a light source arranged to illuminate the pattern displayed by the display device.

11. A method of projecting a first image onto a first image plane and a second image onto a second image plane at substantially the same time, the method comprising:

a. determining a first hologram of the first image;
b. determining a first lens area of a first lens function having first optical power, wherein said first lens function enables formation of the first image on the first image plane;
c. determining a second hologram of the second image;
d. determining a second lens area of a second lens function having second optical power, wherein said second lens function enables formation of the second image on the second image plane; wherein the first optical power and second optical power are different such that the first image and second image are projected different distances from the pattern when the pattern is illuminated; the method further comprising:
e. displaying a first pattern area comprising the first hologram and the first lens area on a display device;
f. displaying a second pattern area comprising the second hologram and the second lens area on the display device; and
g. illuminating the display device.

12. The method of claim 11 wherein steps e. and f. are carried out substantially simultaneously with one another.

13. The method of claim 11 or claim 12 further comprising determining a plurality of lens areas of the first lens function, wherein:

the first lens area is comprised within said plurality;
each lens area, comprised within said plurality, comprises an arc; and
wherein each of said arcs has a first common centre.

14. The method of claim 13 wherein the first common centre is located on a projection axis of the display device and/or wherein the first image is formed within a first holographic replay field, on the first image plane, wherein an axis defined between the first common centre and the first image plane centre intersects a centre of the first holographic replay field.

15. The method of any of claims 11 to 14 further comprising determining a plurality of lens areas of the second lens function, wherein:

the second lens area is comprised within said plurality;
each lens area, comprised within said plurality, comprises an arc; and
wherein each of said arcs has a second common centre, and optionally wherein the second common centre is located on a projection axis of the display device and/or wherein the second image is formed within a second holographic replay field, on the second image plane, wherein an axis defined between the second common centre and the second image plane centre intersects a centre of the second holographic replay field.

FIGURE 1

FIGURE 2A

FIGURE 2B

FIGURE 2C

FIGURE 3

| H1 | H1 |
|----|----|
| H1 | H1 |

410

420

400

450

f1

FIGURE 4

| H2 | H2 |
|----|----|
| H2 | H2 |

510 →

520 →

400

450

452

f1

f2

FIGURE 5

| H1 | H2 |
|----|----|
| H1 | H2 |

610

620

600    450    452

f1

f2

FIGURE 6

Europäisches
Patentamt

European
Patent Office

Office européen
des brevets

# EUROPEAN SEARCH REPORT

Application Number

**EP 22 16 1513**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 593 838 B1 (TWO TREES PHOTONICS LTD [GB]) 4 July 2018 (2018-07-04) <br> * abstract * <br> * figures 3,4 * <br> * paragraph [0031] - paragraph [0033] * <br> ----- | 1-15 | INV. <br> G03H1/22 <br> G03H1/30 <br> G03H1/32 <br> G03H1/08 |

TECHNICAL FIELDS
SEARCHED        (IPC)

G03H

The present search report has been drawn up for all claims

| Place of search | Date of completion of the search | Examiner |
|---|---|---|
| Munich | 18 March 2022 | Sittler, Gilles |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 16 1513**

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2022

| Patent document cited in search report | | Publication date | Patent family member(s) | | Publication date |
|---|---|---|---|---|---|
| EP 2593838 | B1 | 04-07-2018 | EP | 2593838 A1 | 22-05-2013 |
| | | | GB | 2482065 A | 18-01-2012 |
| | | | JP | 6154321 B2 | 28-06-2017 |
| | | | JP | 6711769 B2 | 17-06-2020 |
| | | | JP | 2013540278 A | 31-10-2013 |
| | | | JP | 2017142506 A | 17-08-2017 |
| | | | US | 2013265622 A1 | 10-10-2013 |
| | | | US | 2017364028 A1 | 21-12-2017 |
| | | | US | 2021341879 A1 | 04-11-2021 |
| | | | WO | 2012007762 A1 | 19-01-2012 |

EPO FORM P0459

## REFERENCES CITED IN THE DESCRIPTION

**Patent documents cited in the description**

- GB 2498170 A
- GB 2501112 A
- EP 3650949 A
- EP 2030072 A